# FASCICULE DE BREVET EUROPEEN

(11) **EP 1 283 758 B1**
(45) Date de publication et mention de la délivrance du brevet: **20.02.2008**
(21) Numéro de dépôt: 01928040.3
(22) Date de dépôt: 24.04.2001
(51) Int. Cl.: B23K 11/31

(54) **ARTICULATION POUR PINCE DE SOUDAGE ELECTRIQUE PAR POINTS ET PINCE MUNIE D'UNE ARTICULATION**
GELENK EINER ZANGE ZUM PUNKTSCHWEISSEN UND ZANGE MIT DIESEM GELENK
BRACKET FOR ELECTRIC SPOT WELDING PLIERS PROVIDED WITH A HINGE

(30) Priorité: 28.04.2000 FR 0005452
(43) Date de publication de la demande: 19.02.2003
(73) Titulaire: Finuchem Technologies de Soudage, 93166 Noisy Le grand (FR)
(72) Inventeur: BEFFRIEU, Michel, F-93460 Gournay sur Marne (FR)
(74) Mandataire: Bertrand, Didier
(86) Numéro de dépôt international: PCT/FR2001/001246
(87) Numéro de publication internationale: WO 2001/083150

(56) Documents cités:
- DE-A- 19 801 652
- DE-U- 9 000 456
- GB-A- 2 278 562

## Description

La présente invention concerne une articulation pour pince de soudage électrique par points formée par un support mâle monté à pivotement relatif, entre deux joues d'un support femelle, autour d'un axe d'articulation, chaque support portant un bras interchangeable muni d'une électrode, ledit axe d'articulation étant coaxial à un axe de tourillonnement de l'ensemble des supports solidaire d'un support de pince, un organe de commande à actionnement hydraulique, pneumatique ou électrique assurant le pivotement relatif des supports mâle et femelle.

Une telle pince de soudage est connue en particulier par EP-A-0.500.410.

Le principal problème posé par ces pinces connues est l'isolation électrique du circuit en amont des électrodes et les risques d'usure des pièces d'isolation utilisées, en particulier au niveau de l'articulation.

Pour résoudre ce problème EP-A-0.500.410 a proposé de réaliser les supports d'articulation en aluminium traité par anodisation dure et de disposer, entre le support mâle et les joues du support femelle, de part et d'autre du support mâle, deux plaques de glissement portées par l'axe d'articulation.

Cette solution s'est révélée extrêmement favorable et a permis la fabrication de pinces de soudage avec des électrodes parfaitement isolées.

Cependant, les pinces ainsi fabriquées ont révélé un défaut de résistance mécanique de l'articulation qui s'est traduit par des ruptures.

Une étude approfondie des phénomènes intervenant au cours des opérations de soudage a révélé que la fragilité de l'articulation résultait du fait que le traitement par anodisation dure provoquait, de manière connue en soi, des phénomènes de micro-fissures dans les surfaces traitées, lesquelles micro-fissures réduisaient la résistance mécanique des supports, en particulier dans les zones soumises à des efforts élevés. En outre, les plaques de glissement portées par l'axe d'articulation provoquaient, de manière inattendue, une usure des surfaces adjacentes dures des supports, qui entraînait une diminution de l'isolation voulue.

La présente invention vise en conséquence à proposer une nouvelle pince du type mentionné à l'introduction dont l'articulation ne présente pas les inconvénients ci-dessus.

A cet effet, la pince selon l'invention est caractérisée en ce que le support femelle est en aluminium ou alliage d'aluminium traité par anodisation dure au moins sur les faces de ses joues en regard du support mâle, ledit support mâle étant lui-même en aluminium ou alliage d'aluminium non traité, les faces du support mâle en regard des joues du support femelle étant munies de plaques de glissement fixées auxdites faces du support mâle.

De manière surprenante, la suppression du traitement d'anodisation dure sur le support mâle renforce considérablement la résistance mécanique de l'articulation, sans diminution de l'isolation électrique du circuit en amont des électrodes, alors que la fixation des plaques de glissement sur le support mâle empêche pratiquement toute usure des surfaces dures du support femelle. Cette suppression de traitement entraîne en outre une réduction du coût de fabrication.

De préférence, seules les joues du support femelle sont traitées par anodisation dure.

Avantageusement, les plaques de glissement sont fixées, de préférence collées, dans une surface talonnée respective des faces du support mâle en regard des joues du support femelle.

Selon une forme de réalisation de l'invention, les supports mâle et femelle sont munis de mortaises de fixation d'oreilles de l'organe de commande. On obtient ainsi des possibilités accrues de modification de l'articulation, avec un accroissement de la résistance mécanique, dues au remplacement, sur le support mâle décrit dans EP-A-0.500.410, d'une chape de fixation par un système de mortaises et d'oreilles.

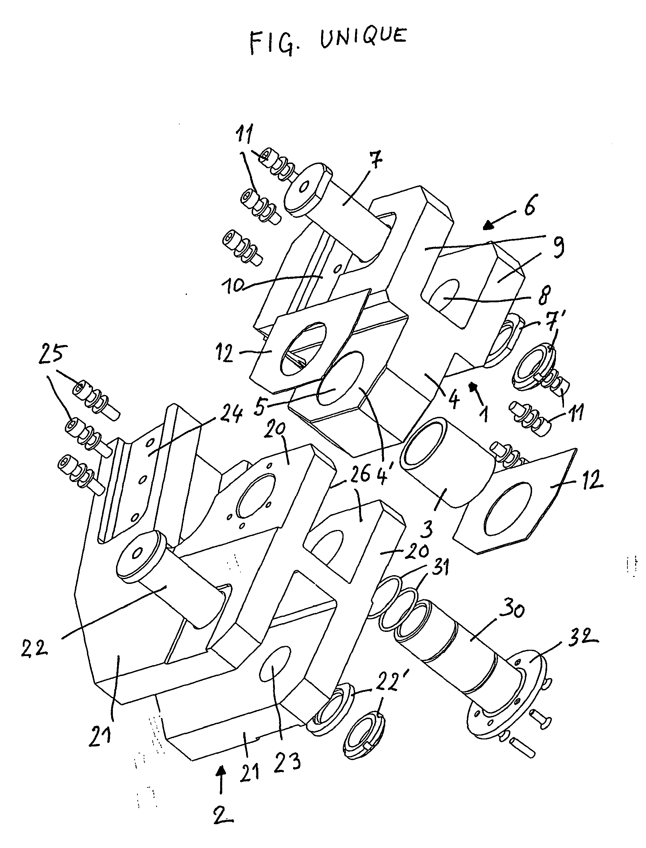

D'autres caractéristiques et avantages de la présente invention ressortiront de la description suivante, en référence au dessin annexé dont la figure unique est une vue schématique explosée de l'articulation selon un exemple de réalisation de l'invention.

Dans le dessin annexé, on n'a représenté que l'articulation de la pince dont les autres composants, tels que bras, électrodes et porte-électrodes, organe de commande, alimentation électrique, etc, sont bien connus.

L'articulation est constituée d'un support mâle 1 et d'un support femelle 2 montés pivotants, l'un par rapport à l'autre autour d'un axe creux 3 et constitués d'aluminium ou d'un alliage d'aluminium.

Le support mâle 1 comprend une portion centrale 4 de pivotement munie d'un alésage 5 de passage de l'axe creux 3 d'une seule pièce avec une chape 6 de fixation d'un bras (non représenté) au moyen d'un axe épaulé 7, maintenu par des écrous 7' et traversant des alésages 8 de joues 9 opposées de la chape 6 et un alésage correspondant de l'extrémité du bras opposée à l'électrode. Dans la chape 6 sont ménagées des mortaises 10 de fixation d'oreilles d'un organe de commande (non représenté), tel qu'un vérin hydraulique ou pneumatique ou d'un mécanisme de translation commandé par un moteur électrique, qui peut être appelé vérin électrique, la fixation des oreilles se faisant par des boulons 11. La portion centrale 4 comporte deux faces planes 4' opposées munies d'un talonnage de bord et sur lesquelles sont fixées par exemple par collage, deux plaques de glissement 12 de forme correspondante et qui sont arrêtées en position, outre la fixation, par appui contre le talonnage. Ces plaques de glissement 12 sont constituées, de manière connue, de matières fibreuses assemblées et leur mode d'immobilisation garantit la solidarisation avec le support mâle 1, tout en permettant leur remplacement, après usure, par décollage.

Le support femelle 2 est constitué de deux voiles réunis par une entretoise de manière à former deux joues d'articulation 20 prolongées par deux joues de fixation 21 du second bras (non représenté) au moyen d'un axe épaulé 22', traversant des alésages 23 des joues de fixation 21 et un alésage du bras, l'axe épaulé 22 étant maintenu par des écrous 22. Comme le support mâle 1, le support femelle 2 est muni de mortaises 24 de fixation du second bras par l'intermédiaire de boulons 25.

Un axe de tourillonnement 30 est monté à rotation dans l'axe creux 3, par l'intermédiaire de joints 31, et comporte une collerette 32 de fixation à un support de pince (non représenté) qui peut être un support fixe, dans le cas d'une pince machine, ou un support solidaire d'un robot, dans le cas d'une pince robot.

Selon une caractéristique fondamentale de la présente invention, le support mâle 1 n'est pas traité alors que, dans le support femelle 2, au moins les faces internes 26 en regard des joues d'articulation 20 ont subi un traitement de durcissement superficiel par anodisation. En pratique, seules les deux joues d'articulation 20 sont traitées car il est difficile de faire subir un traitement d'anodisation aux seules faces internes 26 des joues d'articulation 20. Par contre, le reste du support femelle 2 n'étant pas traité, la formation de micro-fissures y est évitée.

L'invention concerne également une pince de soudage électrique par points équipée d'une telle articulation.

## Revendications

1. Articulation pour pince de soudage électrique par points formée par un support mâle (1) monté à pivotement relatif, entre deux joues (20) d'un support femelle (2), autour d'un axe d'articulation (3), chaque support (1, 2) portant un bras interchangeable muni d'une électrode, ledit axe d'articulation (3) étant coaxial à un axe de tourillonnement (30) de l'ensemble des supports (1, 2) solidaire d'un support de pince, un organe de commande à actionnement hydraulique, pneumatique ou électrique assurant le pivotement relatif des supports mâle et femelle (1, 2),
**caractérisée en ce que** le support femelle (2) est en aluminium ou alliage d'aluminium traité par anodisation dure au moins sur les faces (26) de ses joues (20) en regard du support mâle (1), ledit support mâle (1) étant lui-même en aluminium ou alliage d'aluminium non traité, les faces (4') du support mâle (1) en regard des joues (20) du support femelle (2) étant munies de plaques de glissement (12) fixées auxdites faces (4') du support mâle (1).

2. Articulation selon la revendication 1,
**caractérisée en ce que** seules les joues (20) du support femelle (2) sont traitées par anodisation dure.

3. Articulation selon l'une des revendications 1 et 2,
**caractérisée en ce que** les plaques de glissement (12) sont fixées, de préférence collées, dans une surface talonnée respective des faces (4') du support mâle (1) en regard des joues (20) du support femelle (2).

4. Articulation selon l'une des revendications 1 à 3,
**caractérisée en ce que** les supports mâle (1) et femelle (2) sont munis de mortaises (10, 24) de fixation d'oreilles de l'organe de commande.

5. Pince de soudage électrique par points,
**caractérisée en ce qu'**elle comprend une articulation selon l'une des revendications 1 à 4.

## Claims

1. Hinge for electric spot welding pliers formed by a male support (1) mounted for a relative pivoting motion between two flanges (20) of a female support (2), about a hinge pin (3), each support (1,2) having an interchangeable arm provided with an electrode, the said hinge pin (3) being coaxial with a journal pin (30) for both the supports (1,2) fixedly attached to a pliers support, a hydraulically, pneumatically or electrically actuated control member ensuring the relative pivoting of the male and female supports (1, 2),
**characterised in that** the female support (2) is made of aluminium or aluminium alloy treated by hard anodizing at least on the faces (26) of its flanges (20) facing the male support (1), said male support (1) being itself made of untreated aluminium or aluminium alloy, the faces (4') of the male support (1) facing the flanges (20) of the female support (2) being provided with slide plates (12) fixed to the said faces (4') of the male support (1).

2. Hinge as claimed in claim 1, **characterised in that** only the flanges (20) of the female support (2) are treated by hard anodizing.

3. Hinge as claimed in any one of claims 1 and 2, **characterised in that** the slide plates (12) are fixed, preferably stuck, in a respective heeled surface of the faces (4') of the male support (1) facing the flanges (20) of the female support (2).

4. Hinge as claimed in any one of claims 1 to 3, **characterised in that** the male (1) and female (2) supports are provided with mortises (10,24) for fixing lugs of the control member.

5. Electric spot welding pliers, **characterised in that** they have a hinge as claimed in any one of claims 1 to 4.

## Patentansprüche

1. Gelenk für eine Zange zum elektrischen Punktschweißen, welches aus einem aufzunehmenden Support (1), der zu einer entsprechenden Verschwenkung zwischen zwei Seitenteilen bzw. Anschlägen (20) eines aufnehmenden Supports (2) um eine Gelenkachse (3) montiert bzw. festgelegt ist, wobei jeder Support (1, 2) einen austauschbaren Arm trägt, der mit einer Elektrode versehen bzw. ausgerüstet ist, wobei die Gelenkachse (3) koaxial zu einer Drehachse (30) der Gesamtheit der Supporte (1, 2) einstückig bzw. solidar mit einem Zangensupport ist, wobei ein Steuer- bzw. Regelelement bzw. -organ mit hydraulischer, pneumatischer oder elektrischer Betätigung die relative Verschwenkung des aufzunehmenden und aufnehmenden Supports (1, 2) sicherstellt,
**dadurch gekennzeichnet, daß** der aufnehmende Support (2) aus Aluminium oder einer Aluminiumlegierung besteht, die durch Hartanodisierung wenigstens auf den Flächen (26) seiner Seitenteile (20) in Hinblick auf den aufzunehmenden Support (1) behandelt ist, wobei der aufzunehmende Support (1) selbst aus nicht behandeltem Aluminium oder nicht behandelter Aluminiumlegierung besteht, wobei die Flächen (4') des aufzunehmenden Supports (1) in Hinblick auf die Seitenteile (20) des aufnehmenden Supports (2) mit Gleitplatten (12) versehen sind, die an den Flächen (4') des aufzunehmenden Supports (1) festgelegt sind.

2. Gelenk nach Anspruch 1,
**dadurch gekennzeichnet, daß** einzig die Seitenteile (20) des aufnehmenden Supports (2) durch Hartanodisierung behandelt sind.

3. Gelenk nach Anspruch 1 oder 2,
**dadurch gekennzeichnet, daß** die Gleitplatten (12) an einer Fläche bzw. Oberfläche festgelegt, vorzugsweise geklebt sind, welche entsprechend der Flächen (4') des aufzunehmenden Supports (1) in bezug auf die Seitenteile (20) des aufnehmenden Supports (2) abgesetzt sind.

4. Gelenk nach einem der Ansprüche 1 bis 3,
**dadurch gekennzeichnet, daß** der aufzunehmende (1) und der aufnehmende (2) Support mit Schlitzen bzw. Einschnitten bzw. Öffnungen (10, 24) zur Festlegung von Ohren des Steuer- bzw. Regelorgans versehen sind.

5. Zange für elektrisches Punktschweißen,
**dadurch gekennzeichnet, daß** sie ein Gelenk nach einem der Ansprüche 1 bis 4 umfaßt.
